# EUROPEAN PATENT APPLICATION

(11) **EP 4 383 032 A1**
(43) Date of publication of application: **12.06.2024**
(21) Application number: 22852587.9
(22) Date of filing: 25.03.2022
(51) Int. Cl.: G05B 23/02, G06F 16/903

(54) **OPERATION DISPLAY SYSTEM, INFORMATION PROCESSING METHOD, AND INFORMATION PROCESSING PROGRAM**

(30) Priority: 03.08.2021 JP 2021127712
(71) Applicant: OMRON Corporation, Kyoto 600-8530 (JP)
(72) Inventor: NAGATA, Yuta, Kyoto-shi, Kyoto 600-8530 (JP)
(74) Representative: Mewburn Ellis LLP
(86) International application number: PCT/JP2022/014424
(87) International publication number: WO 2023/013158

(57) **Abstract**

An operation display system that constitutes at least a part of a control system for controlling a control target includes: a display unit; an input unit that receives a user operation; a control unit that controls the display unit to display a selected page among one or more pages prepared in advance; an acquisition unit that acquires history information in which user operations and events are recorded in a time series; and a generation unit that extracts a pattern constituted of a plurality of user operations included in the acquired history information and that generates an operation object corresponding to a user operation included in the extracted pattern.

## Description

### TECHNICAL FIELD

The present invention relates to assistance for a user operation in a control system for controlling a control target.

### BACKGROUND ART

At various production sites, a user operation is provided to a control device through a device called a human machine interface (HMI), and various types of information is provided to the user through the HMI.

For example, National Patent Publication No. 2016-506559 (PTL 1) discloses a method for changing an object to be used in a display screen of an HMI device.

### CITATION LIST

### PATENT LITERATURE

PTL 1: National Patent Publication No. 2016-506559

### SUMMARY OF INVENTION

### TECHNICAL PROBLEM

A user interface screen displayed on the HMI is designed in consideration of a manufacturing facility and work. However, improvements are being made at the production site on a daily basis, and therefore there is a need to flexibly modify or change the user interface screen in accordance with such improvements.

It is one object of the present invention to provide a mechanism by which operability can be improved by using knowledge realized as a daily user operation.

### SOLUTION TO PROBLEM

According to one example of the present invention, there is provided an operation display system that constitutes at least a part of a control system for controlling a control target. The operation display system includes: a display unit; an input unit that receives a user operation; a control unit that controls the display unit to display a selected page among one or more pages prepared in advance; an acquisition unit that acquires history information in which user operations and events are recorded in time series; and a generation unit that extracts a pattern constituted of a plurality of user operations included in the acquired history information and that generates an operation object corresponding to a user operation included in the extracted pattern. According to this configuration, the operation object can be generated from the pattern included in the history information in which the user operations and the events are recorded in time series. Thus, it is possible to generate an operation object using knowledge realized as a daily user operation.

The generation unit may specify a session based on, as a criterion, an explicit or implicit feature included in the history information and/or an event having occurred in the control target, and may extract the pattern based on the specified session as a unit. According to this configuration, it is possible to generate an operation object corresponding to an appropriate user operation for occurrence of a specific event.

The generation unit may extract, as the pattern, a plurality of user operations common among a plurality of the sessions. According to this configuration, since similar user operations are extracted as the pattern across the plurality of sessions, it is possible to generate an operation object corresponding to a user operation that occurs highly frequently.

The explicit feature may be occurrence of an alarm. The generation unit may specify, as a session, an interval from occurrence of a specific alarm included in the history information to recovery from the alarm. According to this configuration, it is possible to generate an operation object corresponding to a user operation from occurrence of an alarm corresponding to a certain abnormality to recovery therefrom.

In accordance with a predetermined criterion, the generation unit may determine a pattern for generating the operation object, among patterns extracted from a plurality of the sessions. According to this configuration, an effective pattern that conforms to the predetermined criterion can be extracted from among various patterns included in the history information.

The predetermined criterion may include at least one of a frequency of occurrence of the pattern, a degree of importance of an event corresponding to the pattern, a degree of proficiency of a user who has performed an operation corresponding to the pattern, a degree of importance of an operational aspect corresponding to the pattern, and/or a degree of redundancy of the pattern. According to this configuration, a pattern with higher benefit can be extracted.

The operation display system may further include an analysis unit that extracts the implicit feature by analyzing the history information and/or a measurement value of the control target. By employing such an analysis unit, a session including a series of operations that are not noticed by the user can be extracted.

The generation unit may extract an operation for outputting an instruction for controlling the control target, among contents of operations included in the history information. Thus, an operation other than the operation for controlling the control target can be excluded from the operation object to be generated.

The page may include one or more second operation objects that each instruct predetermined processing. The operation object may instructs the same processing as a second operation object targeted by a user operation. According to this configuration, a history of operating, by the user, the second operation object included in the page can be collected as the history information.

The operation object may be a copy of a corresponding second operation object. According to this configuration, the operation object is independent of the second operation object, with the result that the generated operation object can be further edited, etc.

Each operation object may include an instruction for accessing a corresponding second operation object. According to this configuration, the operation object can be substantially integrated with the second operation object, with the result that even when the second operation object is changed, etc., the changed content can be automatically reflected in the operation object.

According to another example of the present invention, there is provided an information processing method in a control system for controlling a control target. The information processing method includes: controlling a display unit to display a selected page among one or more pages prepared in advance; acquiring history information in which user operations and events are recorded in time series; and extracting a pattern constituted of a plurality of user operations included in the acquired history information, and generating an operation object corresponding to a user operation included in the extracted pattern.

According to still another example of the present invention, there is provided an information processing program to be executed by a computer that constitutes at least a part of a control system for controlling a control target. The information processing program causes the computer to perform: controlling a display unit to display a selected page among one or more pages prepared in advance; acquiring history information in which user operations and events are recorded in time series; and extracting a pattern constituted of a plurality of user operations included in the acquired history information, and generating an operation object corresponding to a user operation included in the extracted pattern.

### ADVANTAGEOUS EFFECTS OF INVENTION

According to the present invention, it is possible to provide a mechanism by which operability can be improved by using knowledge realized as a daily user operation.

### BRIEF DESCRIPTION OF DRAWINGS

Fig. 1 is a schematic diagram showing a main part of a control system according to the present embodiment.
Fig. 2 is a schematic diagram showing an overall configuration example of the control system according to the present embodiment.
Fig. 3 is a block diagram showing a hardware configuration example of an HMI of the control system according to the present embodiment.
Fig. 4 is a block diagram showing a hardware configuration example of a PLC of the control system according to the present embodiment.
Fig. 5 is a schematic diagram showing an example of interaction between the HMI and the PLC in the control system according to the present embodiment.
Fig. 6 is a diagram for illustrating an example of a user operation in the control system according to the present embodiment.
Fig. 7 is a schematic diagram showing an overview of automatic generation processing of the control system according to the present embodiment.
Fig. 8 is a flowchart showing a processing procedure for the automatic generation processing of the control system according to the present embodiment.
Fig. 9 is a schematic diagram showing an overview of automatic extraction processing of the control system according to the present embodiment.
Fig. 10 is a schematic diagram showing the automatic generation processing of the control system according to the present embodiment and a functional configuration for implementing the automatic generation processing.
Fig. 11 is a diagram showing an example of a page for manual generation processing of the control system according to the present embodiment.
Fig. 12 is a diagram for illustrating a processing procedure for the manual generation processing of the control system according to the present embodiment.
Fig. 13 is a diagram for illustrating a processing procedure for the manual generation processing of the control system according to the present embodiment.
Fig. 14 is a schematic diagram showing a functional configuration for implementing the manual generation processing of the control system according to the present embodiment.
Fig. 15 is a diagram for illustrating an example of filtering in the manual generation processing of the control system according to the present embodiment.
Fig. 16 is a flowchart showing a processing procedure for the manual generation processing of the control system according to the present embodiment.
Fig. 17 is a diagram for illustrating an example of a shortcut object generated by the control system according to the present embodiment.
Fig. 18 is a schematic diagram showing a layout example for shortcut objects generated by the control system according to the present embodiment.

### DESCRIPTION OF EMBODIMENTS

With reference to the drawings, an embodiment of the present invention will be described in detail. The same or equivalent part in the drawings is denoted by the same reference numeral, and the description will not be repeated.

### <A. Application Example>

An example of a scene to which the present invention is applied will be described.

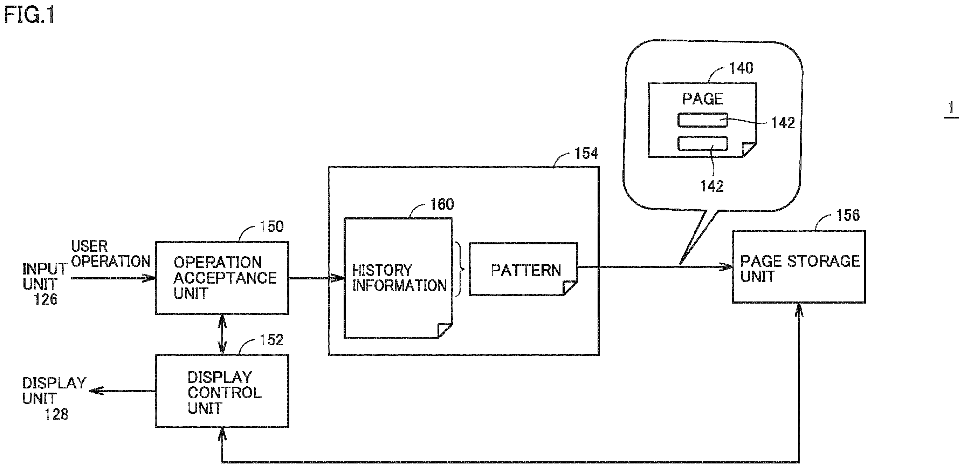

Fig. 1 is a schematic diagram showing a main part of a control system 1 according to the present embodiment. Referring to Fig. 1, control system 1 for controlling a control target includes an operation display system.

As a configuration regarding the operation display system, control system 1 includes an input unit 126 that receives a user operation, a display unit 128, an operation acceptance unit 150, a display control unit 152, a shortcut object generation unit 154, and a page storage unit 156.

Display control unit 152 controls display unit 128 to display a selected page among one or more pages 130 prepared in advance.

Operation acceptance unit 150 acquires history information 160 in which user operations and events are recorded in time series.

Shortcut object generation unit 154 extracts a pattern constituted of a plurality of user operations included in acquired history information 160, and generates a shortcut object 142 (operation object) corresponding to a user operation included in the extracted pattern. A page 140 including generated shortcut object 142 is stored in page storage unit 156.

Thus, control system 1 according to the present embodiment extracts the pattern constituted of the plurality of user operations included in history information 160, and generates shortcut object 142 corresponding to the user operation included in the extracted pattern. Thus, shortcut object 142 for realizing a more efficient user operation can be generated without an explicit instruction.

### <B. Overall Configuration Example of Control System 1>

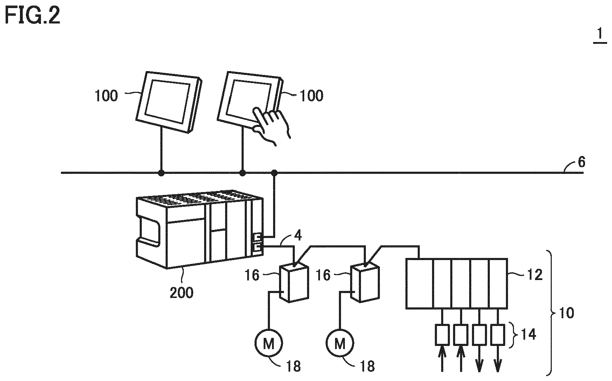

Fig. 2 is a schematic diagram showing an overall configuration example of control system 1 according to the present embodiment. Referring to Fig. 2, control system 1 may control an entire factory or may control a specific manufacturing facility or manufacturing device installed in the factory. Thus, control system 1 is configured to control any control target.

As main components, control system 1 includes one or more HMIs 100, and a PLC (Programmable Logic Controller) 200 serving as a representative example of a control device that controls a control target.

Control system 1 includes an operation display system. HMI 100 constitutes at least a part of the operation display system according to the present embodiment. The operation display system according to the present embodiment constitutes at least part of control system 1, may be implemented by only HMI 100, may be implemented by a plurality of HMIs 100, or may be implemented by HMI 100 and another processing entity.

As used herein, the term "operation display system" encompasses any device including a function of presenting information to a user and a function of receiving an operation from the user.

In the example of Fig. 2, HMI 100 and PLC 200 are connected to each other through an information system network 6. A general-purpose communication protocol such as Ethernet (registered trademark) may be adopted as information system network 6.

HMI 100 receives an operation from the user, provides PLC 200 with an instruction corresponding to the operation, and graphically displays various types of information from PLC 200.

PLC 200 is also connected to a field device group 10. Field device group 10 includes any device required for controlling the control target. More specifically, field device group 10 includes a device that exchanges information with the control target (for example, a manufacturing facility, a manufacturing device, or a sensor and an actuator included in the manufacturing facility or the manufacturing device). In the example of Fig. 2, field device group 10 includes a remote input and output (I/O) device 12, a relay group 14, a servo driver 16, and a servo motor 18.

PLC 200 acquires information from field device group 10 and executes control arithmetic operation according to a previously-produced user program, thereby generating information to be provided to field device group 10. Hereinafter, the information acquired by PLC 200 from field device group 10 is also referred to as "input data", and the information to be provided to field device group 10 is also referred to as "output data".

In the example of Fig. 2, PLC 200 and field device group 10 are connected to each other through a control system network 4. An industrial communication protocol is preferably adopted as control system network 4. EtherCAT (registered trademark), EtherNet/IP (registered trademark), DeviceNet (registered trademark), CompoNet (registered trademark), and the like are known as such a communication protocol.

It should be noted that the connection is not limited to being made through control system network 4 and may be made through a hard wire.

### <C. Hardware Configurations>

Examples of hardware configurations of devices included in control system 1 of the present embodiment will be described below.

### (c1: HMI 100)

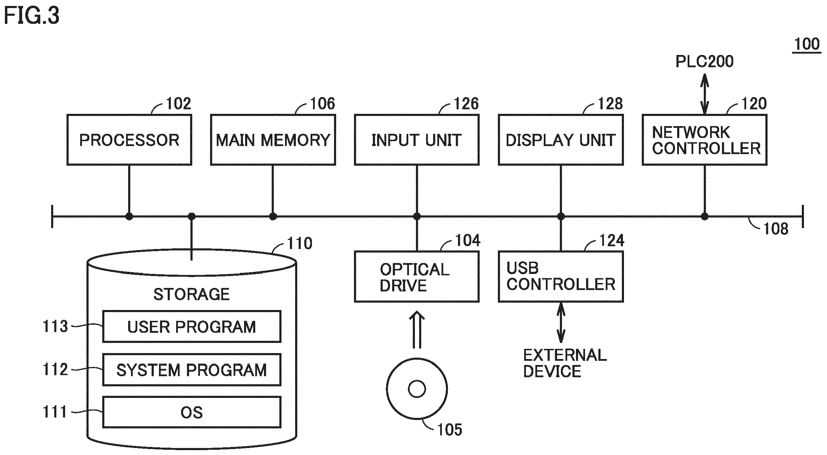

Fig. 3 is a block diagram showing a hardware configuration example of HMI 100 of control system 1 according to the present embodiment. With reference to Fig. 3, HMI 100 includes a processor 102 such as a central processing unit (CPU) or a micro-processing unit (MPU), an optical drive 104, a main memory 106, a storage 110, a network controller 120, a universal serial bus (USB) controller 124, an input unit 126, and a display unit 128. These components are connected together through a bus 108.

Processor 102 reads various programs stored in storage 110, loads the programs in main memory 106, and executes the programs, thereby implementing required processing in HMI 100.

For example, storage 110 includes a hard disk drive (HDD) or a flash solid state drive (SSD). Typically, an operating system (OS) 111, a system program 112 for implementing basic processing, and a user program 113 produced previously according to the control target are stored in storage 110. Required programs other than the programs in Fig. 3 may be stored in storage 110.

HMI 100 may have optical drive 104. Optical drive 104 reads a computer-readable program from a recording medium 105 (for example, an optical recording medium such as a digital versatile disc (DVD)) that non-transiently stores the program, and stores the program in storage 110 or the like.

Various programs executed by HMI 100 may be installed through computer-readable recording medium 105, or may be installed by being downloaded from any server on the network.

Network controller 120 controls the data exchange with PLC 200 and the like through information system network 6.

USB controller 124 controls the data exchange with an external device (for example, a support device) through USB connection.

Input unit 126 is configured of a touch panel, a mouse, a keyboard, and the like, and receives a user operation. Display unit 128 is configured of a display, various indicators, and the like, and outputs a processing result and the like from processor 102. It should be noted that a touch panel display may be adopted in which input unit 126 and display unit 128 are integrated.

Although the configuration example in which required processing are provided by processor 102 executing the program has been described in Fig. 3, a part or all of provided processing may be implemented using a dedicated hardware circuit (for example, an application specific integrated circuit (ASIC) or a field-programmable gate array (FPGA)).

### (c2: PLC 200)

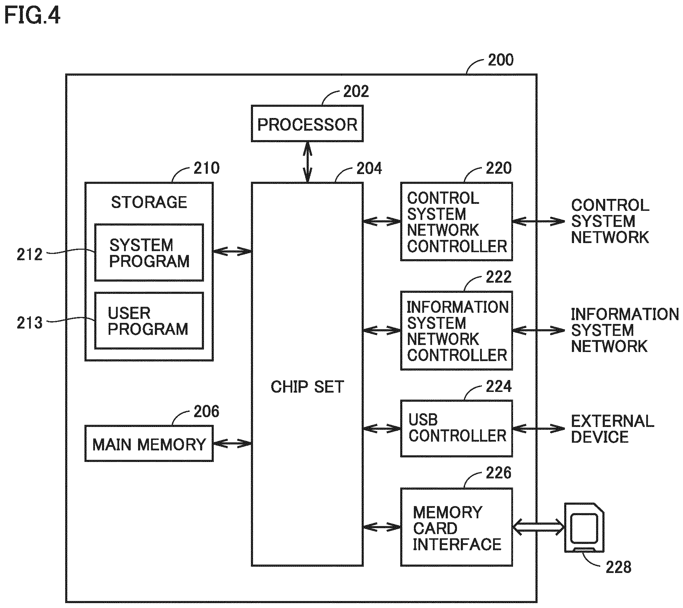

Fig. 4 is a block diagram showing a hardware configuration example of PLC 200 of control system 1 according to the present embodiment. Referring to Fig. 4, PLC 200 includes a processor 202 such as a CPU or MPU, a chipset 204, a main memory 206, a storage 210, a control system network controller 220, an information system network controller 222, a USB controller 224, and a memory card interface 226.

Processor 202 reads various programs stored in storage 210, loads the various programs in main memory 206, and executes the various programs, thereby implementing a control arithmetic operation for controlling the control target. Chip set 204 controls data transmission and the like between processor 202 and each component.

Storage 210 stores a system program 212 for implementing basic processing and a user program 213 for implementing the control arithmetic operation.

Control system network controller 220 controls data exchange with field device group 10 through control system network 4.

Information system network controller 222 controls the data exchange with HMI 100 and the like through information system network 6.

USB controller 224 controls the data exchange with an external device (for example, a support device) through USB connection.

Memory card interface 226 is configured such that a memory card 228 is detachably attached, and memory card interface 226 can write the data in memory card 228 and read various data (user programs, trace data, and the like) from memory card 228.

Although the configuration example in which the required processing is provided by processor 202 executing the program has been illustrated in Fig. 4, some or all of these provided processing may be implemented using the dedicated hardware circuit (for example, the ASIC or the FPGA). Alternatively, the main part of PLC 200 may be implemented using hardware (for example, an industrial personal computer based on a general-purpose personal computer) according to a general-purpose architecture. In this case, a plurality of OSs having different uses may be executed in parallel using a virtualization technology, and the necessary application may be executed on each OS.

### <D. Overview of Processing>

Next, an example of processing executed by HMI 100 of control system 1 according to the present embodiment will be described.

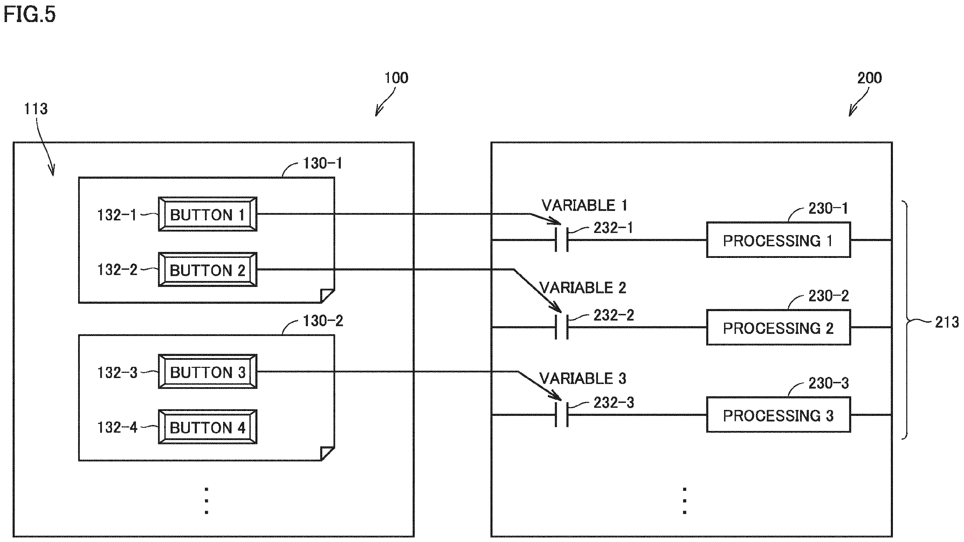

Fig. 5 is a schematic diagram showing an example of interaction between HMI 100 and PLC 200 in control system 1 according to the present embodiment. Referring to Fig. 5, HMI 100 selectively displays one or more pages 130-1, 130-2, ... (hereinafter, also collectively referred to as "page 130") in accordance with user program 113. Each of pages 130 includes one or more operation objects 132-1, 132-2, 132-3, ... (hereinafter, also collectively referred to as "operation object 132").

Each of operation objects 132 (second operation objects) encompasses an object that accepts a user operation. Typically, in response to a user operation, operation object 132 instructs PLC 200 to perform predetermined processing. Examples of operation object 132 include: a button for instructing to turn ON or OFF in accordance with a user operation; a lever or slider for changing or updating to any value in accordance with a user operation; and the like.

User program 213 to be executed by PLC 200 includes, for example, processing execution instructions 230-1, 230-2, 230-3, ... (hereinafter, also collectively referred to as "processing execution instruction 230"). Processing execution instructions 230-1, 230-2, 230-3 are respectively associated with variables 232-1, 232-2, 232-3 (hereinafter, also collectively referred to as "variable 232") indicating execution conditions.

Each of operation objects 132 included in page 130 changes a value of a variable of PLC 200 associated therewith in advance, in accordance with the user operation. In the example shown in Fig. 5, operation object 132-1 of page 130-1 is associated with variable 232-1, operation object 132-2 of page 130-1 is associated with variable 232-2, and operation object 132-3 of page 130-2 is associated with variable 232-3.

In this way, HMI 100 selectively displays page 130 including one or more operation objects 132, accepts a user operation on displayed page 130, and provides an associated instruction to PLC 200. As an implementation of providing an instruction to PLC 200, processing of changing or updating the value of variable 232 held by PLC 200 may be adopted as described above.

Next, an example of the user operation will be described.

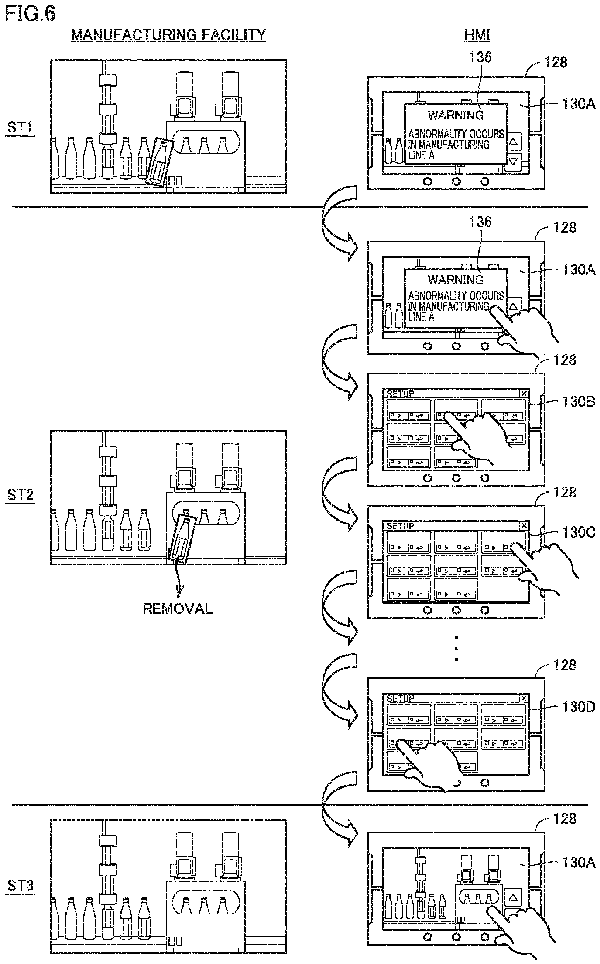

Fig. 6 is a diagram for illustrating an example of the user operation in control system 1 according to the present embodiment. Fig. 6 shows an example of a series of operations (work sequence) for recovery from occurrence of an abnormality to a normal operation in a manufacturing facility that continuously processes a workpiece.

It is assumed that an abnormality such as blockage with a workpiece has occurred in the manufacturing facility (state ST1). On this occasion, a warning message 136 is displayed on display unit 128 of HMI 100 in addition to a page 130A indicating an operation state.

The user (operator) notices the occurrence of the abnormality by warning message 136. Then, the user visually checks the manufacturing facility, and perform a procedure (in this example, removal of the workpiece) for eliminating the abnormality (state ST2).

For the procedure for eliminating the abnormality, the user selects warning message 136, performs an operation for checking the content of the warning, and then performs an operation for removing the workpiece. Examples of the operation for removing the workpiece include: releasing a safety guard for accessing the manufacturing facility; closing the safety guard after removing the workpiece; and the like. Further, after the workpiece is removed, an operation such as origin return (i.e., initialization) or abnormal state resetting is performed. Such a series of operations are performed, for example, in the following manner: pages such as page 130A, a page 130B, and a page 130C are sequentially switched and a corresponding operation object included in each page 130 is operated.

After the series of abnormalities are eliminated and the user confirms safety of the manufacturing facility, the user operates a corresponding operation object of a page 130D of HMI 100, thereby resuming the operation.

When the manufacturing facility is returned to the normal operating state (state ST3), the user makes reference to page 130A of HMI 100 to confirm that the manufacturing facility is normally operated.

In the processing procedure of sequentially switching the plurality of pages 130 and operating operation objects 132, an unnecessary operation or waiting time may be caused such as page transition. On the other hand, in the manufacturing facility in which various abnormalities can occur, it is difficult to determine, in the stage of design, a processing procedure by which recovery from each abnormality should be made. Further, it is often reviewed what processing procedure is most efficient whenever an abnormality actually occurs.

Here, a feature of the series of operations (work sequence) performed by the user (operator) will be described. When HMI 100 is operated to control the manufacturing facility, the order of operations is important. Although it is not always necessary to perform operations in a specific order, it is recommended to perform operations in a predetermined specific order in order to prevent a mistake or the like.

Further, a work sequence with high reproducibility is highly likely to lead to a more efficient work. As a result, by performing operations in accordance with the work sequence with high reproducibility, it is possible to increase a possibility of reducing time required to achieve a task.

Here, the term "task" encompasses a matter to be achieved by operating HMI 100 by the user (operator). Examples of the "task" include recovery from abnormality, operation start, end processing, setup for another process, and preparation for daily report.

Further, not only a frequency of occurrence of the same or similar work but also an effect of the task achieved by efficiently performing the work should be taken into consideration. When a certain work is a critical path that affects throughput of production, whether or not the work can be efficiently performed is an important matter.

Further, a work sequence that frequently occurs in the same type of manufacturing facility is often applicable to other manufacturing facilities of the same type. Therefore, there is a high possibility that the work can be efficient by standardizing a work sequence that frequently occurs.

Further, users (operators) are different in term of a length of experience and a degree of proficiency, and they may also have their own habits in operating HMI 100. Efficiency of a work may be decreased due to such habits.

In order to address such problems, control system 1 according to the present embodiment provides a function of collecting one or more necessary operation objects 132 in a single page 130 in order to achieve a target task. By collecting necessary operation objects 132 in single page 130, a more efficient operation can be implemented when a corresponding abnormality occurs, and even a user with less knowledge and less experience can perform a predetermined processing procedure. The processing of collecting necessary operation objects 132 in a single page 130 as provided by control system 1 according to the present embodiment is also referred to as "shortcut generation processing" for convenience of description.

Control system 1 according to the present embodiment can perform processing (automatic generation processing and automatic extraction processing) for generating shortcut object 142 based on the history information in which the user operations and the events are recorded in time series, and/or can perform processing (manual generation processing) for generating shortcut object 142 in accordance with an explicit operation by the user. It should be noted that control system 1 may implement at least one of the automatic generation processing, the automatic extraction processing, and/or the manual generation processing. That is, it is not necessary to implement all of the automatic generation processing, the automatic extraction processing, and the manual generation processing, and at least one processing may be implemented depending on a situation, a need, and the like.

### <E. Shortcut Generation Processing: Automatic Generation Processing>

First, an example of the automatic generation processing performed by control system 1 according to the present embodiment will be described.

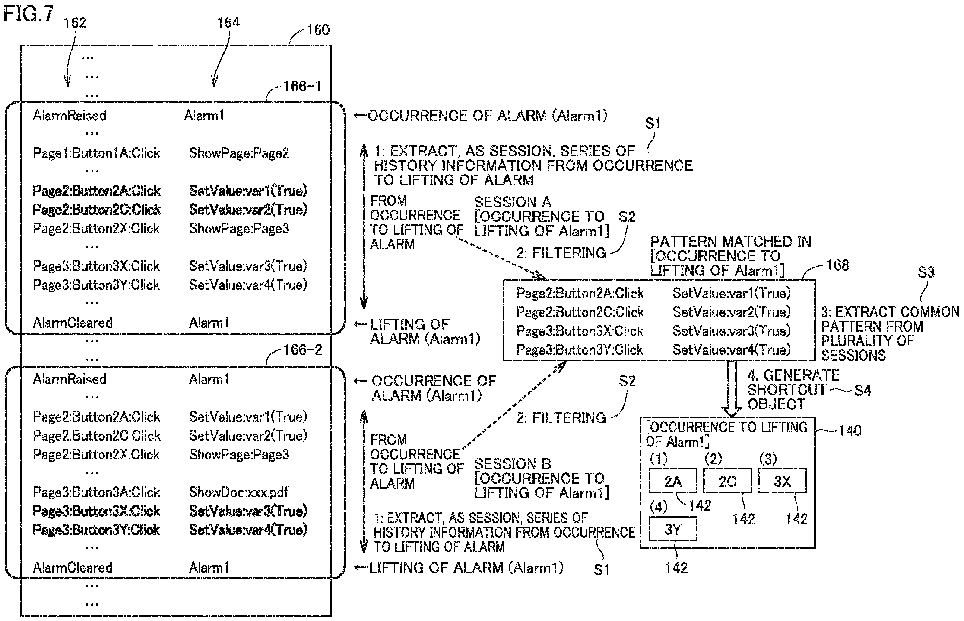

Fig. 7 is a schematic diagram showing an overview of the automatic generation processing of control system 1 according to the present embodiment. Fig. 7 shows an example of processing for generating: a shortcut object 142 to address occurrence of a particular event (for example, an alarm); and a page 140 including shortcut object 142.

Referring to Fig. 7, HMI 100 acquires history information 160 in which user operations and events are recorded in time series. History information 160 includes, in time series, action information 162 including contents of operations by a user or events having occurred, and processing information 164 including contents of processing performed in HMI 100.

When generation of shortcut object 142 for a specific alarm (Alarm1) is instructed, HMI 100 extracts, as a session, a series of history information 160 from occurrence to lifting of the target alarm (step S1). In the example shown in Fig. 7, since the alarm has occurred twice, two sessions 166-1, 166-2 (session A and session B) (hereinafter, also collectively referred to as "session 166") are extracted.

In the present specification, the term "session" means one interval for which one or more shortcut objects 142 are to be generated. That is, the "session" means from the start to end of a series of operations (work sequence) required to achieve a target task.

As shown in Fig. 7, for example, the "session" corresponds to an interval between occurrence of a certain alarm as a start point and elimination of the occurred alarm as an end point. Thus, when occurrence of a specific event is occurrence of an alarm, HMI 100 specifies, as a session 166, an interval from occurrence of the specific alarm included in history information 160 to recovery from the alarm. It should be noted that the start point and end point of the "session" can be freely determined depending on a purpose.

Next, HMI 100 filters extracted sessions 166 (step S2). In this filtering, an operation for outputting an instruction for controlling the control target is extracted among the contents of the operations included in history information 160. Thus, only information for generating shortcut object 142 can be extracted. For example, processing "ShowPage" as included in each of sessions 166-1, 166-2 means page transition. Therefore, since it is an operation unnecessary to generate shortcut object 142, it is excluded in the filtering. The processing "ShowDoc" as included in session 166-2 means display of a document such as a manual. Therefore, since it is an operation unnecessary to generate shortcut object 142, it is excluded in the filtering.

As a result, in the example shown in Fig. 7, only information indicated in bold is extracted among the time-series information included in each of sessions 166-1, 166-2.

Then, HMI 100 extracts a common pattern 168 from the plurality of sessions 166 (step S3). That is, HMI 100 extracts, as a pattern 168, a plurality of user operations common among the plurality of sessions 166.

In the example shown in Fig. 7, a common pattern 168 including four operations by the user is extracted. HMI 100 generates one or more shortcut objects 142 in accordance with an operation included in extracted common pattern 168 and a content of corresponding processing. In the example shown in Fig. 7, four shortcut objects 142 are generated and a page 140 including generated four shortcut objects 142 is output.

In this way, HMI 100 extracts the pattern constituted of the plurality of user operations included in acquired history information 160, and generates shortcut object 142 (operation object) corresponding to the user operation included in the extracted pattern. On this occasion, HMI 100 specifies session 166 based on, as a criterion, an explicit or implicit feature (occurrence of a specific event in the above example) included in history information 160 or an event having occurred in the control target, and extracts pattern 168 based on specified session 166 as a unit.

Shortcut object 142 instructs the same processing as processing of an operation object 132 targeted by a user operation. Shortcut object 142 may be a copy of a corresponding operation object 132 or may be implemented to include an instruction for accessing a corresponding operation object 132 as described later.

In this way, in response to designation of an event or the like, HMI 100 extracts information (session 166) of an interval of the designated event (for example, from occurrence to lifting of an alarm) as included in history information 160, filters the extracted information, and generates a shortcut object 142.

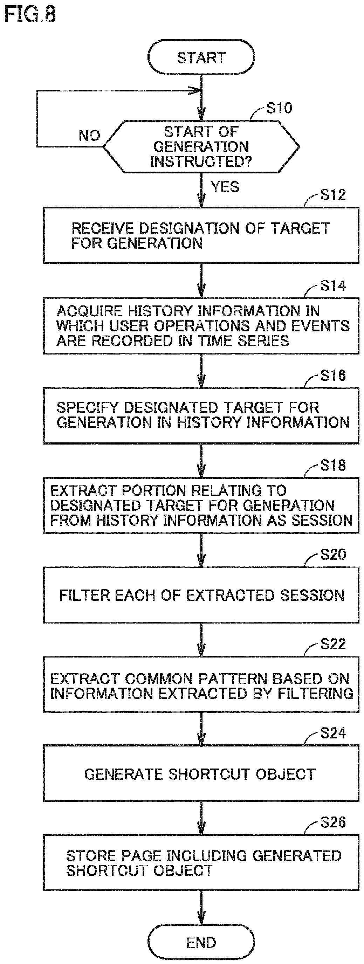

Fig. 8 is a flowchart showing a processing procedure for the automatic generation processing of control system 1 according to the present embodiment. Each step shown in Fig. 8 is typically implemented by executing system program 112 (Fig. 3) by processor 102 of HMI 100.

Referring to Fig. 8, HMI 100 determines whether or not start of generation of shortcut object 142 is instructed (step S10).

When the start of generation of shortcut object 142 is not instructed (NO in step S10), the processing of step S10 is repeated.

When the start of generation of shortcut object 142 is instructed (YES in step S10), HMI 100 receives designation of a target for generation (step S12).

HMI 100 acquires history information in which user operations and events are recorded in time series (step S14), and specifies the designated target for generation in the acquired history information (step S16). Then, HMI 100 extracts a portion relating to the designated target for generation from the history information as session 166 (step S18). Normally, a plurality of sessions 166 are extracted.

Then, HMI 100 filters each of extracted sessions 166 (step S20), and extracts a common pattern 168 based on the information extracted by the filtering (step S22).

Then, HMI 100 generates one or more shortcut objects 142 in accordance with contents of the operations included in extracted common pattern 168 and of corresponding processing (step S24). Finally, HMI 100 stores a page including generated shortcut object(s) 142 (step S26). In this way, the automatic generation processing is ended.

### <F. Shortcut Generation Processing: Automatic Extraction Processing>

Next, an example of the automatic extraction processing performed by control system 1 according to the present embodiment will be described.

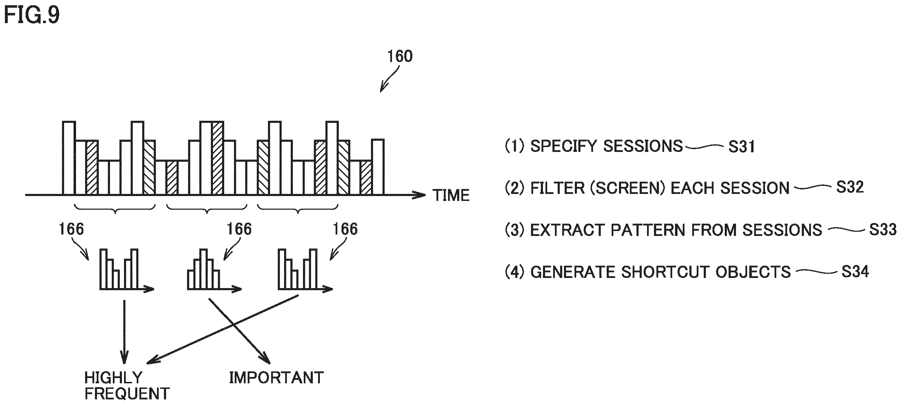

Fig. 9 is a schematic diagram showing an overview of the automatic extraction processing of control system 1 according to the present embodiment. Referring to Fig. 9, HMI 100 specifies one or more sessions 166 included in history information 160 in which user operations and events are recorded in time series (step S31).

Then, HMI 100 filters specified session(s) 166 (step S32). Then, HMI 100 extracts a pattern from filtered session(s) 166 (step S33).

Finally, HMI 100 generates one or more shortcut objects 142 from the extracted pattern (step S34).

In this way, HMI 100 extracts a pattern constituted of a plurality of user operations included in acquired history information 160, and generates a shortcut object 142 (operation object) corresponding to a user operation included in the extracted pattern.

Hereinafter, each step will be described in detail.

### (f1: Specifying Session (S31))

As method of specifying a session, an explicit or implicit feature (occurrence of a specific event in the above example) included in history information 160 and/or an event having occurred in the control target can be employed as a criterion.

As an example of the explicit feature, a series of history information from occurrence to lifting of an event such as an alarm may be specified as one session as described with reference to Figs. 7 and 8.

In this case, the user (operator) makes a recovery from an abnormality corresponding to the alarm. The specified session includes a series of operations (work sequence) relating to this recovery. The content of the work sequence differs depending on the content of the occurred alarm (i.e., the abnormality corresponding to the alarm). On the other hand, since it is considered that the work sequence is the same for the same alarm, a pattern can be extracted.

As another method of specifying a session, an operation of preparing a daily report by the user (operator) may be employed as a trigger. The operation of preparing a daily report is a predetermined operation performed in a specific time period. The operation of preparing a daily report includes, for example, an operation of sequentially displaying pages indicating target information in order to leave production information, various sensor values, and the like as a report after a daily work is completed. In this case, a shortcut object 142 for sequentially displaying the pages indicating the target information is generated.

As still another method of specifying a session, a status managed by PLC 200 may be used. For example, status information such as operation start and stop of a manufacturing facility, switching to an operation mode or a maintenance mode, and the like may be used to specify a session.

In addition to or instead of the above explicit feature, the following implicit feature may be used.

For example, while no alarm is generated, any sign (temperature increase, generation of abnormal sound, or increase in defective ratio) in the control target may be used as implicit information for specifying a session. It should be noted that the session can be specified using any explicit or implicit feature included in the event having occurred in the control target. On this occasion, the implicit feature can be extracted or found by analyzing a certain measurement value of the control target.

Further, by analyzing the history information, an event that occurs regularly (for example, a certain event that occurs at the start of operation (at the start-up) or a certain event that occurs on every Tuesday) may be used as the implicit information for specifying a session. By specifying a session using such information, it is possible to record: the phenomenon that frequently occurs at the start of operation and a measure for avoiding such a phenomenon; and the phenomenon that frequently occurs on every Tuesday and a measure for avoiding such a phenomenon.

The implicit feature included in the history information and/or the event having occurred in the control target can be extracted or found by analyzing the history information (information recorded in time series) and/or the measurement value of the control target (information recorded in time series) through a known analysis method. That is, control system 1 according to the present embodiment may have a function of extracting the implicit feature by analyzing the history information and/or the measurement value of the control target.

By using such an analysis method, it is possible to provide beneficial information (insight) not noticed even by the user (operator). As a result, since the beneficial information not noticed is generated in the form of shortcut object 142, it is possible to explicitly know that there is importance in generated shortcut object 142 or the pattern indicated by shortcut object 142.

### (f2: Filtering (S32))

In the filtering, information less relevant to achieve a target task is excluded from the history information. It should be noted that instead of excluding all the less relevant information, the less relevant information may be held as additional information.

For example, at least one of a page transition operation, an alarm viewer checking operation, a trouble shooting information display operation, and/or a manual display operation may be excluded from the history information.

### (f3: Extracting Pattern (S33))

By searching for a similarity among sessions from each of which the less relevant information has been excluded by the filtering, patterns are extracted and a pattern with high benefit is determined from the extracted patterns. That is, a plurality of patterns are extracted by searching for a similarity among a large number of sessions.

In this way, HMI 100 specifies a session based on, as a criterion, an explicit or implicit feature (for example, occurrence of an alarm or status) included in history information 160 and/or an event having occurred in the control target, and extracts a pattern based on the specified session as a unit. Then, in accordance with a predetermined criterion, HMI 100 determines a pattern for generating shortcut object 142, among patterns extracted from the plurality of sessions.

The predetermined criterion may include at least one of a frequency of occurrence of a pattern, a degree of importance of an event corresponding to the pattern, a degree of proficiency of a user who has performed an operation corresponding to the pattern, a degree of importance of an operational aspect corresponding to the pattern, and/or a degree of redundancy of the pattern.

These elements may be used to determine a benefit. That is, among the plurality of extracted patterns, a pattern with high benefit may be determined as a target for generation for shortcut object 142.

More specifically, the benefit may be determined based on a frequency of occurrence of a pattern (frequency of appearance of each pattern in the history information), a degree of importance of an alarm (or abnormality of a target), a degree of proficiency of the user (operator), a halt time of operation, a degree of importance of a workpiece/process/device, a degree of redundancy of a work sequence, and the like.

Regarding these elements that determine the benefit, for example, operations by a user with a high degree of proficiency are highly likely to be a more preferable work sequence with less waste. It can be estimated that the benefit is higher as the pattern is extracted from a session involving a user (operator) with a higher degree of proficiency. Efficiency of a work sequence having a large variation in content depending on a user (operator) can be improved by standardizing the work sequence.

When extracting a pattern with a high frequency of occurrence, a plurality of user operations (work sequence) common among a plurality of sessions are extracted.

Further, for an alarm for which a total operation halt time is large or an alarm for which loss is relatively large when an abnormality occurs, time until recovery is made short by making the work sequence efficient, thereby improving productivity more effectively.

The importance of the workpiece/process/device may also be determined based on whether it is a critical path that affects throughput of the production. That is, for a target for which the production is affected immediately when a certain abnormality occurs, the time until recovery is made short by making the work sequence efficient, thereby limiting the influence on the production.

Further, the redundancy of the work sequence may be determined based on, for example, the number of pages to be transitioned in one operation. That is, when one work sequence is constituted of operations on operation objects 132 displayed by sequentially switching a plurality of pages, the operation can be made efficient by collecting target operation objects 132 in one page.

### (f4: Generating Shortcut Object)

One or more shortcut objects 142 are generated in accordance with the pattern(s) extracted by the above-described processing. When a plurality of patterns are extracted, the extracted patterns may be displayed for the user in the form of a list. On this occasion, in consideration of the benefit as described above, a pattern with higher benefit may be displayed at a higher position.

When the user selects any pattern or approves it as a target for generation, one or more shortcut objects 142 may be generated from the pattern.

### <G. Functional Configuration>

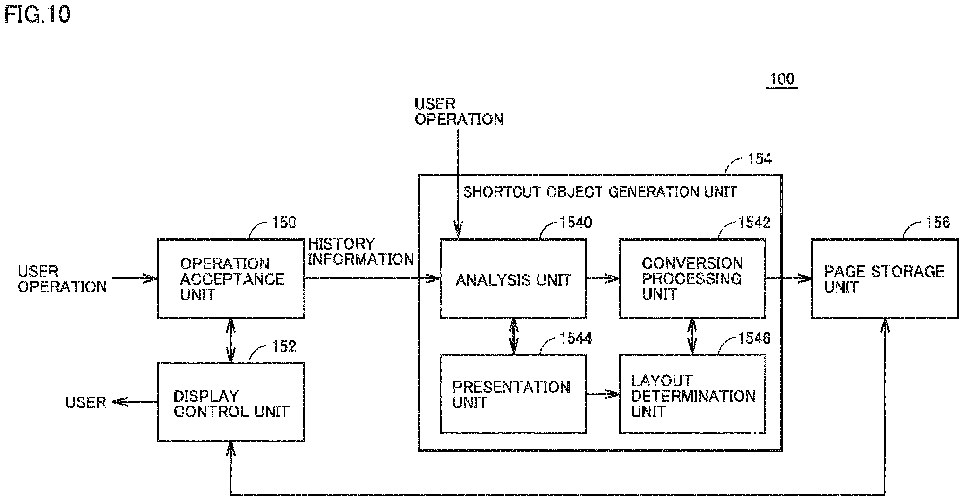

Fig. 10 is a schematic diagram showing the automatic generation processing of control system 1 according to the present embodiment as well as a functional configuration for implementing the automatic generation processing. Each functional configuration shown in Fig. 10 is typically implemented by executing system program 112 (Fig. 3) by processor 102 of HMI 100.

Referring to Fig. 10, HMI 100 includes operation acceptance unit 150, display control unit 152, shortcut object generation unit 154, and page storage unit 156.

Operation acceptance unit 150 accepts a user operation provided via input unit 126 or the like. Operation acceptance unit 150 outputs, to shortcut object generation unit 154, information for specifying an operation object 132 selected by the user operation, or the like.

Display control unit 152 controls display unit 128 to display a selected page among one or more pages prepared in advance. More specifically, in response to the user operation, display control unit 152 selects a page stored in page storage unit 156, and controls display unit 128 to display the selected page.

Shortcut object generation unit 154 generates one or more shortcut objects 142 based on the acquired history information. Shortcut object generation unit 154 stores, in page storage unit 156, information of page 140 including the generated one or more shortcut objects 142.

More specifically, shortcut object generation unit 154 includes an analysis unit 1540, a conversion processing unit 1542, a presentation unit 1544, and a layout determination unit 1546.

Analysis unit 1540 deals with main processing for the automatic generation processing and the automatic extraction processing described above. More specifically, analysis unit 1540 extracts a pattern constituted of a plurality of user operations included in acquired history information. Typically, analysis unit 1540 specifies a session included in the history information in accordance with a user operation or the like, and extracts a pattern from the specified session.

Conversion processing unit 1542 generates a shortcut object 142 (operation object) corresponding to a user operation included in the pattern extracted by analysis unit 1540. That is, conversion processing unit 1542 generates one or more corresponding shortcut objects 142 based on the pattern extracted by analysis unit 1540.

Presentation unit 1544 presents the one or more patterns extracted by analysis unit 1540 to the user. Presentation unit 1544 may display the patterns in the form of a list in accordance with an order corresponding to the benefits of the patterns.

Layout determination unit 1546 determines a layout of one or more shortcut objects 142 generated by conversion processing unit 1542. The layout will be described later in detail.

Page storage unit 156 stores page 140 including one or more shortcut objects 142 generated by shortcut object generation unit 154. Page 140 stored in page storage unit 156 is selectively displayed together with page 130 generated in advance, in response to a user operation.

### <H. Shortcut Generation Processing: Manual Generation Processing>

Next, an example of the manual generation processing performed by control system 1 according to the present embodiment will be described.

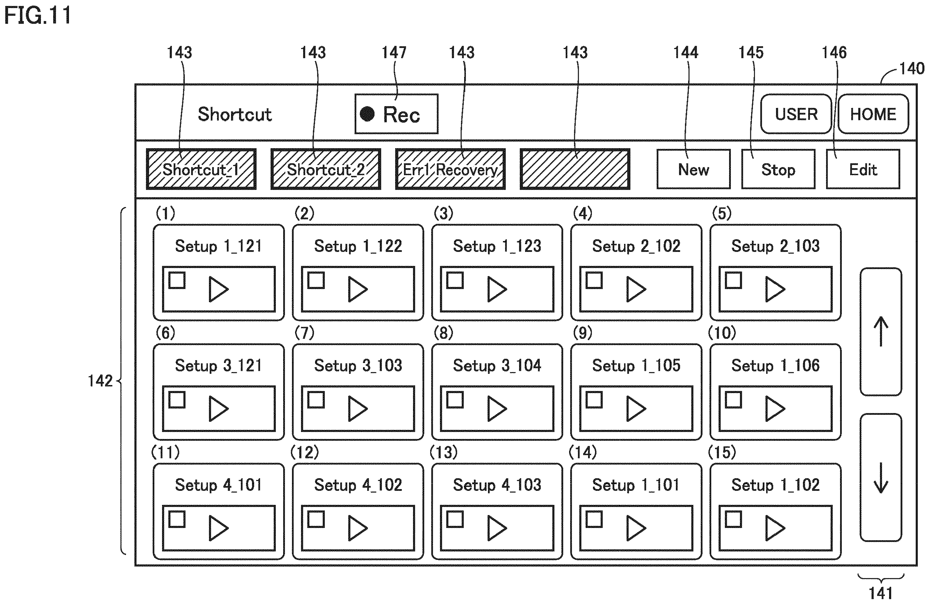

Fig. 11 is a diagram showing an example of a page 140 for the manual generation processing of control system 1 according to the present embodiment. Referring to Fig. 11, page 140 includes one or more shortcut objects 142 generated by the manual generation processing. Each of shortcut objects 142 corresponds to an operation object 132 included in a page 130. Shortcut object 142 may be a copy of a corresponding operation object 132 or may be implemented to include an instruction for accessing a corresponding operation object 132 as described later.

Thus, in the manual generation processing, new page 140 including one or more shortcut objects 142 may be generated. It should be noted that shortcut object 142 may be generated by being added to an existing page 130.

As shown in Fig. 11, page 140, which does not include an operation object other than one or more shortcut objects 142, may be displayed to the user. By displaying such a page 140, possibility of the user performing an unnecessary operation or the like is reduced, thus resulting in a more efficient operation.

Although page 130 including only operation objects 132 and page 140 including only shortcut objects 142 are illustrated for convenience of description, operation objects 132 and shortcut objects 142 may be both included in page 130 or page 140.

In accordance with selection of a page switching object 141, shortcut objects 142 displayed on page 140 are sequentially switched.

The content of page 140 to be displayed is switched in response to selection among one or more page selection objects 143. In the example shown in Fig. 11, a page 140 provided with a label "Shortcut_1" is displayed.

Page 140 includes an addition starting object 144 and an addition ending object 145. When addition starting object 144 is selected, recording of a shortcut object 142 (corresponding operation object 132) that should be added to selected page 140 is started. On the other hand, when addition ending object 145 is selected, recording of a shortcut object 142 (corresponding operation object 132) that should be added to selected page 140 is ended.

Page 140 includes an editing object 146 for changing, adding, or deleting shortcut object 142.

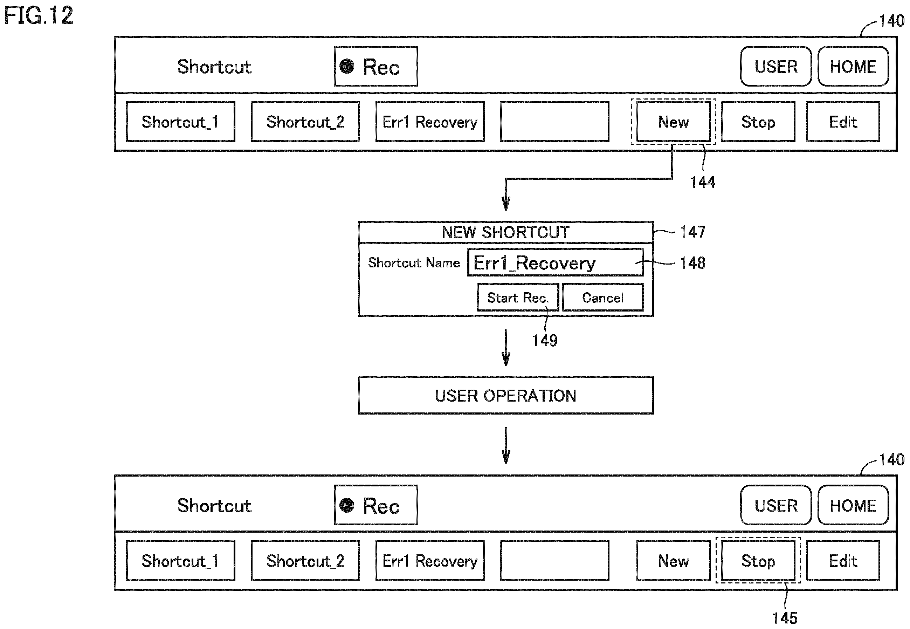

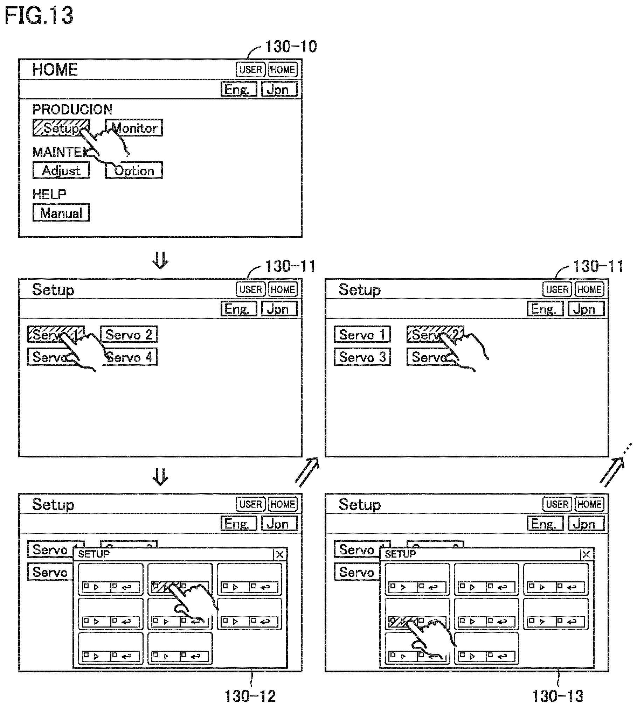

Each of Figs. 12 and 13 is a diagram for illustrating a processing procedure for the manual generation processing of control system 1 according to the present embodiment.

Referring to Fig. 12, when addition starting object 144 of page 140 is selected, processing of generating (adding) a shortcut object 142 is started. In response to the selection of addition starting object 144, a dialog 147 for setting the label name of page 140 is displayed. The user inputs an intended label 148 into dialog 147 and selects a starting object 149. Then, the user performs intended operations as shown in Fig. 13.

Finally, when addition ending object 145 of page 140 is selected, page 140 including shortcut object 142 corresponding to the user operation is generated.

It should be noted that the label input to dialog 147 is set in page 140. Fig. 13 illustratively shows that the user freely inputs the label of page 140, but it is not limited thereto, and the label may be automatically determined based on the content or date and time of the abnormality having occurred.

Referring to Fig. 13, the user performs operations corresponding to shortcut objects 142 to be generated. Fig. 13 illustratively shows that an operation object included in a page 130-10 for displaying main information is selected to transition to a page 130-11, and an operation object included in page 130-11 is selected to display a page 130-12. The user selects an intended operation object in page 130-12.

It is illustratively shown that thereafter, the user returns to page 130-11, another operation object included in page 130-11 is selected, and a page 130-13 is displayed. The user selects another intended operation object in a page 130-13. As shown in Fig. 13, the user performs the series of operations.

Typically, shortcut objects 142 respectively corresponding to the operation object included in page 130-12 and the operation object included in page 130-13 are generated by the below-described processing. That is, each of the operations performed until page 130-12 is displayed after displaying page 130-10 and then page 130-11 and the operation performed until page 130-13 is displayed after displaying page 130-12 and then page 130-11 is an operation for page transition, and is not an operation for providing an instruction to PLC 200. That is, each of them does not need to be generated as shortcut object 142. Therefore, control system 1 according to the present embodiment extracts an operation matching with a predetermined rule from among the operations performed by the user, and generates a shortcut object 142 corresponding to the extracted operation.

It should be noted that each of Figs. 12 and 13 illustratively shows that shortcut objects 142 are generated by explicitly selecting addition starting object 144 and addition ending object 145 by the user; however, it is not limited thereto, and generation of a shortcut object 142 may be started when a predetermined condition is satisfied.

For example, occurrence of a certain abnormality or an alarm or the like may be used as a trigger for starting, and recovery to normal operation may be used as a trigger for ending. On this occasion, during a period of time from the starting to the ending, the user performs a series of operations such as checking the content of the abnormality, eliminating the abnormality, returning to the origin (i.e., initialization), resetting an abnormal state, and confirming the normal operation, and the series of operations may be recorded and corresponding shortcut objects 142 may be generated.

Further, the series of operations as shown in Fig. 13 may be performed when making a recovery from an abnormality having occurred. However, when an abnormality actually occurs, it is normally required to make a recovery from the abnormality immediately, so that the following method may be used.

For example, a simulator (for example, provided by a support device) that simulates a part or whole of control system 1 may be prepared, and the user may perform operations on the simulator to record the series of operations, thereby generating corresponding shortcut objects 142.

Alternatively, the user may operate HMI 100 to record the series of operations with an instruction from HMI 100 to PLC 200 being invalidated, thereby generating corresponding shortcut objects 142.

Alternatively, for example, when an abnormality is intentionally caused to occur and a user in charge of training teaches operations to deal with the occurred abnormality in a situation of training a user with a less experience, the series of operations performed by the user in charge of training may be recorded, thereby generating corresponding shortcut objects 142.

Alternatively, when an abnormality unexpected beforehand occurs, a series of operations for making a recovery from the abnormality may be recorded, thereby generating corresponding shortcut objects 142. In this case, by editing page 140 including generated shortcut objects 142 (the editing can be performed by selecting editing object 146 (see Fig. 11)), a shortcut object 142 corresponding to an unnecessary operation may be deleted afterward.

Further, any information may be added to page 140 including generated shortcut objects 142. Examples of the information to be added include: information indicating the content of the abnormality having occurred; the name of the user who has performed the operation when the abnormality has occurred; date and time of generation; information for specifying a workpiece for which the abnormality has occurred; environment information such as a temperature or humidity; and the like.

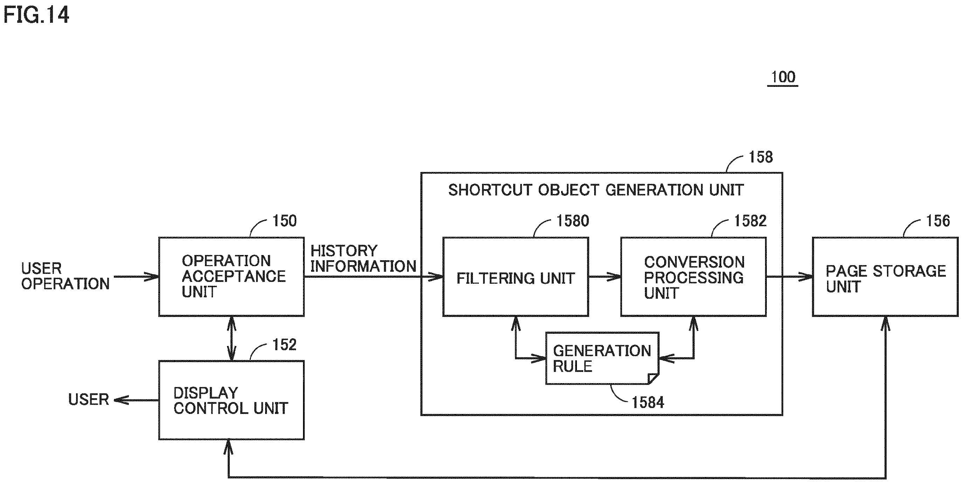

Fig. 14 is a schematic diagram showing a functional configuration for implementing the manual generation processing of control system 1 according to the present embodiment. Each functional configuration shown in Fig. 14 is typically implemented by executing system program 112 (Fig. 3) by processor 102 of HMI 100.

Referring to Fig. 14, HMI 100 includes operation acceptance unit 150, display control unit 152, shortcut object generation unit 158, and page storage unit 156.

Operation acceptance unit 150 accepts a user operation provided via input unit 126 or the like. Operation acceptance unit 150 outputs, to shortcut object generation unit 158, information for specifying an operation object 132 selected by the user operation, or the like.

As described above, operation acceptance unit 150 accepts a predetermined specific user operation (selection of addition starting object 144) and starts acquiring the history information. Further, operation acceptance unit 150 accepts a predetermined specific user operation (selection of addition ending object 145) and ends the acquisition of the history information.

Display control unit 152 controls display unit 128 to display a selected page among one or more pages prepared in advance. More specifically, in response to the user operation, display control unit 152 selects a page stored in page storage unit 156, and controls display unit 128 to display the selected page.

Shortcut object generation unit 158 generates one or more shortcut objects 142 in response to the user operation. Shortcut object generation unit 158 stores, in page storage unit 156, information of page 140 including the generated one or more shortcut objects 142.

Here, shortcut object generation unit 158 extracts one or more operations each matching with a predetermined generation rule 1584 in the acquired history information, and generates, based on the extracted one or more operations, one or more shortcut objects 142 each for instructing the same processing as processing of a corresponding one of one or more operation objects 132 operated by the user.

More specifically, shortcut object generation unit 158 includes a filtering unit 1580 and a conversion processing unit 1582.

Filtering unit 1580 makes reference to generation rule 1584 so as to only extract information for generating a shortcut object 142 among the user operations. Typically, filtering unit 1580 extracts an operation for outputting an instruction for controlling the control target, among the contents of the operations included in the history information.

Further, filtering unit 1580 also determines whether or not a starting condition and an ending condition (starting trigger and ending trigger) for generation of shortcut object 142 are satisfied.

Conversion processing unit 1582 generates a necessary shortcut object 142 based on the information extracted by filtering unit 1580. More specifically, conversion processing unit 1582 may generate a shortcut object 142 by copying a corresponding operation object 132, or may generate a shortcut object 142 to include an instruction for accessing an intended operation object 132.

Page storage unit 156 provides a designated label to page 140 including one or more shortcut objects 142 generated by shortcut object generation unit 158 and stores it. Page 140 stored in page storage unit 156 is selectively displayed together with page 130 generated in advance, in response to a user operation.

Here, an example of generation rule 1584 will be described. In generation rule 1584, a rule for extracting an operation object 132 that should be operated is mainly set.

For example, an operation of TRUE/FALSE on a variable (bit) of PLC 200 (momentary button (driven to TRUE for only one shot)), an operation of changing the variable (bit) of PLC 200 to TRUE or FALSE, or the like is extracted as a target for generation of shortcut object 142. Each of these operations corresponds to the operation for outputting an instruction for controlling the control target.

On the other hand, since the user operation for the page transition is not an operation for providing a certain instruction to PLC 200, the user operation for the page transition may be excluded from the target for generation of shortcut object 142. That is, filtering unit 1580 excludes the user operation for the page transition among the contents of the operations included in the history information.

Further, one or more of an alarm viewer checking operation, a trouble shooting information display operation, and a manual display operation may be excluded from the target for generation of shortcut object 142 because each of these operations is not an operation for providing a certain instruction to PLC 200. That is, filtering unit 1580 excludes at least one of the alarm viewer checking operation, the trouble shooting information display operation, and/or the manual display operation among the contents of the operations included in the history information.

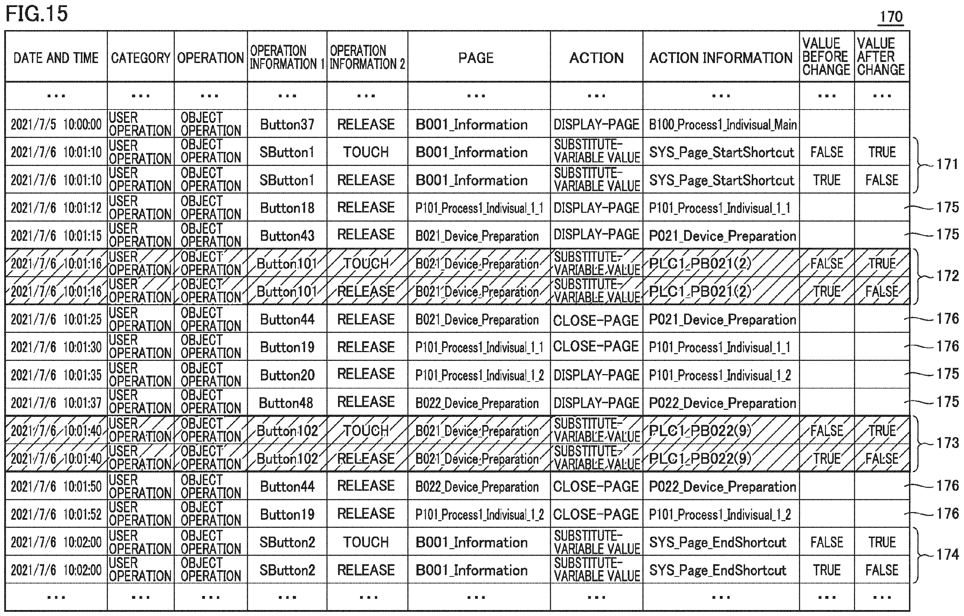

Fig. 15 is a diagram for illustrating an example of filtering in the manual generation processing of control system 1 according to the present embodiment. History information 170 shown in Fig. 15 records user operations in a time-series manner.

History information 170 includes: a user operation 171 indicating selection of addition starting object 144 (momentary button); and a user operation 174 indicating selection of addition ending object 145 (momentary button). One or more user operations performed during a period of time from the selection of addition starting object 144 to the selection of addition ending object 145 are target(s) for generation of shortcut object(s) 142.

Among these user operations, a user operation 172 and a user operation 173 respectively indicating selection of operation objects 132 of "Button 101" and "Button 102" (both are momentary buttons) are extracted as targets for generation of shortcut objects 142. Then, two shortcut objects 142 respectively corresponding to operation objects 132 of "Button 101" and "Button 102" are generated.

On the other hand, a user operation 175 indicating displaying of a page and a user operation 176 indicating closing of the page are excluded from the targets for generation of shortcut objects 142.

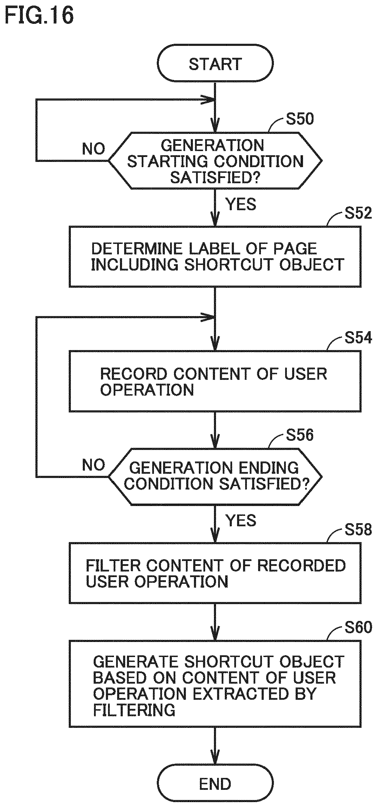

Fig. 16 is a flowchart showing a processing procedure for the manual generation processing of control system 1 according to the present embodiment. Each step shown in Fig. 16 is typically implemented by executing system program 112 (Fig. 3) by processor 102 of HMI 100.

Referring to Fig. 16, HMI 100 determines whether or not a generation starting condition for shortcut object 142 is satisfied (step S50). Examples of the generation starting condition for shortcut object 142 includes: selection of addition starting object 144; occurrence of a predetermined event; and the like.

When the generation starting condition for shortcut object 142 is not satisfied (NO in step S50), the processing of step S50 is repeated.

When the generation starting condition for shortcut object 142 is satisfied (YES in step S50), HMI 100 determines a label of a page including a shortcut object 142 (step S52). It should be noted that the label of the page may be determined by receiving designation of the label by the user. Then, HMI 100 records the content of the user operation (step S54). That is, HMI 100 performs processing for acquiring the history information in which the user operations and the events are recorded in time-series.

Then, HMI 100 determines whether or not a generation ending condition for shortcut object 142 is satisfied (step S56). Examples of the generation ending condition for shortcut object 142 include: selection of addition ending object 145; predetermined recovery from an abnormality; and the like.

When the generation ending condition for shortcut object 142 is not satisfied (NO in step S56), the processing of step S54 and the subsequent steps are repeated.

When the generation ending condition for shortcut object 142 is satisfied (YES in step S56), HMI 100 filters the content of the recorded user operation (step S58), and generates a shortcut object 142 based on the content of the user operation extracted by the filtering (step S60). Then, HMI 100 stores a page including generated shortcut object 142 (step S62).

In the manner described above, the manual generation processing is ended.

### <1. Shortcut Object 142>

Next, shortcut object 142 will be described.

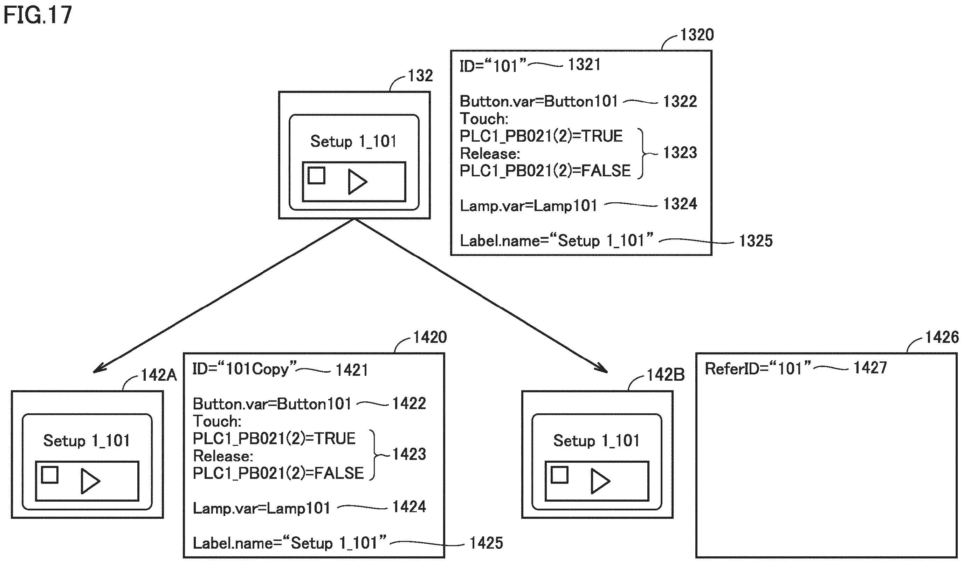

Fig. 17 is a diagram for illustrating an example of shortcut object 142 generated by control system 1 according to the present embodiment. Referring to Fig. 17, setting information 1320 associated with operation object 132 includes, for example, identification information 1321, a variable designation 1322 for a button object, an action designation 1323 set for the button object, a variable designation 1324 for changing a manner of displaying of operation object 132, and a label designation 1325 for operation object 132.

When generating a shortcut object 142A as a copy of operation object 132, setting information 1420 having the same content as the content of setting information 1320 is generated. Setting information 1420 includes, for example, identification information 1421, a variable designation 1422 for a button object, an action designation 1423 set for the button object, a variable designation 1424 for changing a manner of displaying of shortcut object 142, and a label designation 1425 of shortcut object 142.

Since shortcut object 142A as a copy of operation object 132 exists independent of operation object 132, even when a certain change is made to one object, the other object is not affected.

When generating a shortcut object 142B implemented to include an instruction for accessing operation object 132, a reference designation 1427 indicating a reference to identification information 1321 included in operation object 132 to be accessed is included as setting information 1420 of shortcut object 142B. That is, reference designation 1427 corresponds to the instruction for accessing operation object 132.

In the case of shortcut object 142B implemented to include such an instruction for accessing operation object 132, both the objects are substantially integrated and a change to an object is therefore reflected in both the objects.

It should be noted that shortcut object 142 may be an object including a single button, a composite object including a plurality of buttons, or a composite object including a button and a component other than the button.

### <J. Page Layout>

Various determination methods can be adopted with regard to a layout for shortcut objects 142 on the page generated by the above-described processing.

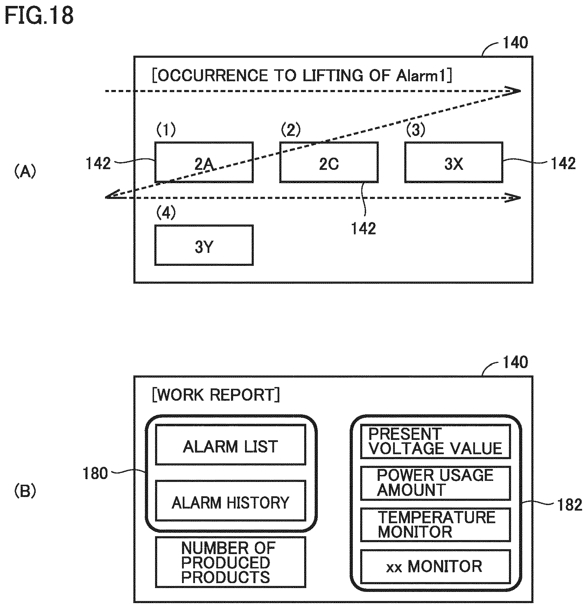

Fig. 18 is a schematic diagram showing a layout example for the shortcut objects generated by control system 1 according to the present embodiment.

Referring to Fig. 18(A), when the order of the series of operations (work sequence) is meaningful in the extracted pattern, one or more shortcut objects 142 may be arranged in page 140 so as to conform to the order of the series of operations.

Alternatively, the position of shortcut object 142 may be adjusted in accordance with the frequency, degree of importance, and the like. For example, buttons that are not dependent on the order of operations but are frequently used at the same time may be arranged in combination. Further, a shortcut object 142 having a high frequency or degree of importance may be arranged at a position at which it is easier to operate or at a position at which it is highly viewable.

Referring to Fig. 18(B), in page 140, a shortcut group 180 constituted of shortcut objects each having a high degree of importance is arranged at the upper left side for the sake of high operability and high visibility. On the other hand, in a shortcut group 182 having a low degree of importance, shortcut objects are each displayed to be relatively small. Thus, the shortcut objects each having a low frequency and a low degree of importance may be displayed to be small or may be displayed in the form of a list box or the like so as to arrange a larger number of shortcut objects.

In this way, the layout for the generated shortcut objects on the page may be appropriately changed in accordance with the extracted pattern. It should be noted that not only the display size of each shortcut object is changed as shown in Fig. 18(B) but also a manner of displaying (displayed color, font, or the like) of the shortcut object may be appropriately changed in accordance with the evaluation result (frequency, degree of importance, or the like) of the extracted pattern.

Further, the manner of displaying may be different depending on the attribute of the user who operates the shortcut object.

For example, a page including a shortcut object for maintenance of HMI 100 may be displayed for a user having an administrative privilege, and a page including a shortcut object for normal operation may be displayed for a general user (operator or the like).

Further, types of shortcut objects to be displayed on a page may be made different depending on a division to which the user belongs. For example, for a division that deals with production technology and facility design, a page including a shortcut object for the purpose of debugging or troubleshooting may be displayed, whereas for a general user (operator or the like), only a page including a shortcut object for ordinary operation may be displayed.

Further, for a device provider, a parameter is a part of know-how in developing devices, and therefore a page for displaying the parameter may not be presented to the user to which the device is provided.

Further, the size and manner of displaying of the shortcut object may be made different depending on physical characteristics of the user (for example, a dominant arm or size of finger). Also, a comment displayed for the same shortcut object may be displayed in a selected language (for example, Japanese, English, or the like). Further, the manner of displaying can be adapted to a manner of displaying that takes universal design into consideration, and an audio output may also correspond to an attribute of a user.

### <K. Modification>

In the above-described embodiment, it has been illustratively described that HMI 100 mainly performs the shortcut generation processing; however, HMI 100 may perform the shortcut generation processing in cooperation with another processing entity, or the other processing entity may perform the shortcut generation processing instead of HMI 100. Conceivable examples of the other processing entity include PLC 200, the support device, an upper-level server device, and the like. Further, a whole or part of the processing may be performed using cloud computing over a network.

### <L. Appendix>

The present embodiment described above includes the following technical idea.

### [Configuration 1]

An operation display system (100) that constitutes at least a part of a control system (1) for controlling a control target, the operation display system (100) comprising:
a display unit (128);
an input unit (126) configured to receive a user operation;
a control unit (152) configured to control the display unit to display a selected page among one or more pages prepared in advance;
an acquisition unit (150) configured to acquire history information in which user operations and events are recorded in time series; and
a generation unit (154) configured to extract a pattern (168) constituted of a plurality of user operations included in the acquired history information (160) and generate an operation object (142) corresponding to a user operation included in the extracted pattern.

### [Configuration 2]

The operation display system according to configuration 1, wherein the generation unit is configured to specify a session (166) based on, as a criterion, an explicit or implicit feature included in the history information and/or an event having occurred in the control target, and extract the pattern based on the specified session as a unit.

### [Configuration 3]

The operation display system according to configuration 2, wherein the generation unit is configured to extract, as the pattern, a plurality of user operations common among a plurality of the sessions.

### [Configuration 4]

The operation display system according to configuration 2 or 3, wherein
the explicit feature includes occurrence of an alarm, and
the generation unit is configured to specify, as the session, an interval from occurrence of a specific alarm included in the history information to recovery from the alarm.

### [Configuration 5]

The operation display system according to configuration 2, wherein in accordance with a predetermined criterion, the generation unit is configured to determine a pattern for generating the operation object, among patterns extracted from a plurality of the sessions.

### [Configuration 6]

The operation display system according to configuration 5, wherein the predetermined criterion includes at least one of a frequency of occurrence of the pattern, a degree of importance of an event corresponding to the pattern, a degree of proficiency of a user who has performed an operation corresponding to the pattern, a degree of importance of an operational aspect corresponding to the pattern, or a degree of redundancy of the pattern.

### [Configuration 7]

The operation display system according to any one of configurations 2 to 6, further comprising an analysis unit configured to extract the implicit feature by analyzing the history information and/or a measurement value of the control target.

### [Configuration 8]

The operation display system according to any one of configurations 1 to 7, wherein the generation unit is configured to extract an operation for outputting an instruction for controlling the control target, among contents of operations included in the history information.

### [Configuration 9]

The operation display system according to any one of configurations 1 to 8, wherein
the page includes one or more second operation objects (132) that each instruct predetermined processing, and
the operation object is for instructing the same processing as a second operation object targeted by a user operation.

### [Configuration 10]

The operation display system according to configuration 9, wherein the operation object is a copy of a corresponding second operation object.

### [Configuration 11]

The operation display system according to configuration 9, wherein each operation object includes an instruction for accessing a corresponding second operation obj ect.

### [Configuration 12]

An information processing method in a control system (1) for controlling a control target, the information processing method comprising:
controlling a display unit to display a selected page among one or more pages prepared in advance (152);
acquiring history information in which user operations and events are recorded in time series (S14); and
extracting a pattern constituted of a plurality of user operations included in the acquired history information, and generating an operation object corresponding to a user operation included in the extracted pattern (S18, S20, S22, S24; S31, S32, S33, S34).

### [Configuration 13]

An information processing program (112) to be executed by a computer that constitutes at least a part of a control system (1) for controlling a control target, the information processing program causing the computer to perform:
controlling a display unit to display a selected page among one or more pages prepared in advance (152);
acquiring history information in which user operations and events are recorded in time series (S14); and
extracting a pattern constituted of a plurality of user operations included in the acquired history information, and generating an operation object corresponding to a user operation included in the extracted pattern (S18, S20, S22, S24; S31, S32, S33, S34).

### <M. Advantage>

A general user (operator) performs operations as a daily work; however, of course, the general user (operator) does not know what operation frequently occurs among a series of operations or what operation is effective for improvement. Control system 1 according to the present embodiment extracts a series of operations (work sequence) from the acquired history information, and generates a shortcut object corresponding to the extracted work sequence. On this occasion, by determining a pattern with high benefit among the plurality of extracted patterns, it is possible to generate a shortcut object that is beneficial for improvement in the production site and it is possible to realize a work know-how or the like in the form of the shortcut object. The generated shortcut object can also be used for training for a user with less experience.

The embodiments disclosed herein are illustrative and non-restrictive in any respect. The scope of the present invention is defined by the terms of the claims, rather than the embodiments described above, and is intended to include any modifications within the scope and meaning equivalent to the terms of the claims.

### REFERENCE SIGNS LIST

1: control system; 4: control system network; 6: information system network; 10: field device group; 12: remote I/O device; 14: relay group; 16: servo driver; 18: servo motor; 100: HMI; 102, 202: processor; 104: optical drive; 105: recording medium; 106, 206: main memory; 108: bus; 110, 210: storage; 112, 212: system program; 113, 213: user program; 120: network controller; 124, 224: USB controller; 126: input unit; 128: display unit; 130, 130A, 130B, 130C, 130D, 140: page; 132: operation object; 136: warning message; 141: page switching object; 142, 142A, 142B: shortcut object; 143: page selection object; 144: addition starting object; 145: addition ending object; 146: editing object; 147: dialog; 148: label; 149: starting object; 150: operation acceptance unit; 152: display control unit; 154, 158: shortcut object generation unit; 156: page storage unit; 160, 170: history information; 162: action information; 164: processing information; 166: session; 168: pattern; 171, 172, 173, 174, 175, 176: user operation; 180, 182: shortcut group; 200: PLC; 204: chipset; 220: control system network controller; 222: information system network controller; 226: memory card interface; 228: memory card; 230: processing execution instruction; 232: variable; 1320, 1420: setting information; 1321, 1421: identification information; 1322, 1324, 1422, 1424: variable designation; 1323, 1423: action designation; 1325, 1425: label designation; 1427: reference designation; 1540: analysis unit; 1542, 1582: conversion processing unit; 1544: presentation unit; 1546: layout determination unit; 1580: filtering unit; 1584: generation rule; ST1, ST2, ST3: state.

## Claims

1. An operation display system that constitutes at least a part of a control system for controlling a control target, the operation display system comprising:
a display unit;
an input unit configured to receive a user operation;
a control unit configured to control the display unit to display a selected page among one or more pages prepared in advance;
an acquisition unit configured to acquire history information in which user operations and events are recorded in time series; and
a generation unit configured to extract a pattern constituted of a plurality of user operations included in the acquired history information and generate an operation object corresponding to a user operation included in the extracted pattern.

2. The operation display system according to claim 1, wherein the generation unit is configured to specify a session based on, as a criterion, an explicit or implicit feature included in the history information and/or an event having occurred in the control target, and extract the pattern based on the specified session as a unit.

3. The operation display system according to claim 2, wherein the generation unit is configured to extract, as the pattern, a plurality of user operations common among a plurality of the sessions.

4. The operation display system according to claim 2 or 3, wherein
the explicit feature includes occurrence of an alarm, and
the generation unit is configured to specify, as the session, an interval from occurrence of a specific alarm included in the history information to recovery from the alarm.

5. The operation display system according to claim 2, wherein in accordance with a predetermined criterion, the generation unit is configured to determine a pattern for generating the operation object, among patterns extracted from a plurality of the sessions.

6. The operation display system according to claim 5, wherein the predetermined criterion includes at least one of a frequency of occurrence of the pattern, a degree of importance of an event corresponding to the pattern, a degree of proficiency of a user who has performed an operation corresponding to the pattern, a degree of importance of an operational aspect corresponding to the pattern, or a degree of redundancy of the pattern.

7. The operation display system according to any one of claims 2 to 6, further comprising an analysis unit configured to extract the implicit feature by analyzing the history information and/or a measurement value of the control target.

8. The operation display system according to any one of claims 1 to 7, wherein the generation unit is configured to extract an operation for outputting an instruction for controlling the control target, among contents of operations included in the history information.

9. The operation display system according to any one of claims 1 to 8, wherein
the page includes one or more second operation objects that each instructs predetermined processing, and
the operation object is for instructing the same processing as a second operation object targeted by a user operation.

10. The operation display system according to claim 9, wherein the operation object is a copy of a corresponding second operation object.

11. The operation display system according to claim 9, wherein each operation object includes an instruction for accessing a corresponding second operation obj ect.

12. An information processing method in a control system for controlling a control target, the information processing method comprising:
controlling a display unit to display a selected page among one or more pages prepared in advance;
acquiring history information in which user operations and events are recorded in time series; and
extracting a pattern constituted of a plurality of user operations included in the acquired history information, and generating an operation object corresponding to a user operation included in the extracted pattern.

13. An information processing program to be executed by a computer that constitutes at least a part of a control system for controlling a control target, the information processing program causing the computer to perform:
controlling a display unit to display a selected page among one or more pages prepared in advance;
acquiring history information in which user operations and events are recorded in time series; and
extracting a pattern constituted of a plurality of user operations included in the acquired history information, and generating an operation object corresponding to a user operation included in the extracted pattern.
